(19) Europäisches Patentamt
European Patent Office
Office européen des brevets

(11) Veröffentlichungsnummer: **0 123 669**
**A2**

(12) # EUROPÄISCHE PATENTANMELDUNG

(21) Anmeldenummer: **84890046.0**

(22) Anmeldetag: **12.03.84**

(51) Int. Cl.³: **C 01 F 5/14**
C 04 B 35/04

(30) Priorität: **24.03.83 AT 1050/83**

(43) Veröffentlichungstag der Anmeldung:
**31.10.84 Patentblatt 84/44**

(84) Benannte Vertragsstaaten:
**DE GB IT NL**

(71) Anmelder: **VOEST-ALPINE Aktiengesellschaft**
**Friedrichstrasse 4**
**A-1011 Wien(AT)**

(72) Erfinder: **Ludewig, Fritz, Dr. Dipl.-Ing.**
**Lorberaustrasse 13**
**A-8704 Leoben(AT)**

(74) Vertreter: **Haffner, Thomas M., Dr. et al,**
**Patentanwaltskanzlei Dipl.-Ing. Adolf Kretschmer Dr.**
**Thomas M. Haffner Schottengasse 3a**
**A-1014 Wien(AT)**

(54) **Verfahren zum Abtrennen von Boraten von aus Meerwasser erhaltenem Magnesiumhydroxid sowie Vorrichtung zur Durchführung dieses Verfahrens.**

(57) Zum Abtrennen von Boraten von aus Meerwasser erhaltenem Magnesiumhydroxid wird das borathältige Magnesiumhydroxid mit einem Gas, welches überhitzten Wasserdampf, vorzugsweise in Mengen von 40 bis 70 Vol. %, enthält, bei Temperaturen von 1200 bis 1500°C, insbesondere 1300 bis 1400°C, behandelt. Das den überhitzten Wasserdampf enthaltende Gas kann weiters Verbrennungsabgase und im besonderen $CO_2$ und Stickstoff enthalten. Die Vorrichtung zur Durchführung dieses Verfahrens weist einen in einem Reaktorgehäuse 1 angeordneten Wirbelbettreaktor auf, welcher eine feuerfeste Siebbodenplatte 2 enthält. Unterhalb der Siebbodenplatte 2 sind Heizeinrichtungen und Zuführungsdüsen für die Zuführung von wasserdampfhaltigem Gas vorgesehen. Oberhalb der Siebbodenplatte 2 kann ein Sauggebläse angeschlossen sein.

FIG. 1

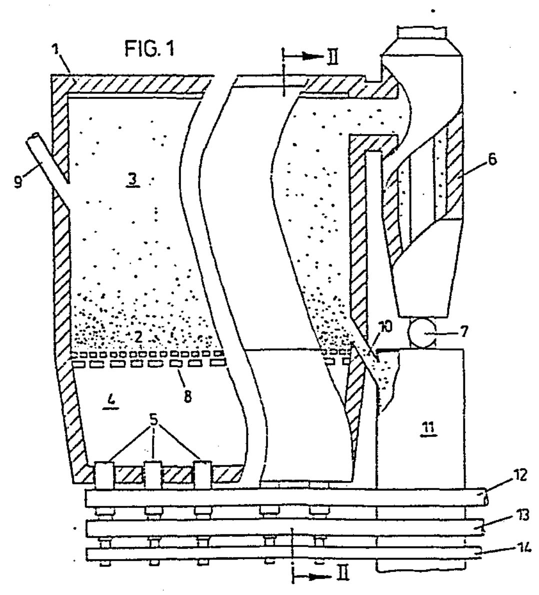


EP 0 123 669 A2

Verfahren zum Abtrennen von Boraten von aus Meerwasser erhaltenem Magnesiumhydroxid sowie Vorrichtung zur Durchführung dieses Verfahrens

Die Erfindung bezieht sich auf ein Verfahren zum Abtrennen von Boraten von aus Meerwasser erhaltenem Magnesiumhydroxid sowie auf eine zur Durchführung dieses Verfahrens besonders bevorzugte Vorrichtung. Zur Herstellung von feuerfesten Auskleidungen kann Magnesia aus Meerwasser beispielsweise durch Fällung mit Kalk- oder Dolomitmilch erhalten werden und das auf diese Weise gebildete Magnesiumhydroxid getrocknet werden. Vor allen Dingen in Ländern mit nur geringem Vorkommen an Magnesit und/oder Dolomit kann kaustisches und aus Meerwasser erhältliches Magnesiumoxid hergestellt werden. Für hochfeuerfeste Zustellungen geeignetes Magnesiumoxid muß aber bestimmten Reinheitsanforderungen entsprechen. Es muß insbesondere arm an schmelzpunkterniedrigenden Verunreinigungen wie $Fe_2O_3$, $SiO_2$ und $B_2O_3$ sein. Meerwassermagnesia erfüllt die Reinheitsanforderungen nur hinsichtlich der Verunreinigungen durch $Fe_2O_3$ und $SiO_2$, nicht jedoch hinsichtlich der Verunreinigungen durch $B_2O_3$.

$B_2O_3$ gelangt durch Mitfällung der im Meerwasser gelösten Borsäure in das ausgefällte Magnesiumhydroxid. Der $B_2O_3$-Gehalt des Magnesiumhydroxids hängt weitgehend von den Fällungsbedingungen ab. Mit der stöchiometrisch erforderlichen oder einer überstöchiometrischen Kalkmilch- oder Dolomitmilchmenge ausgefälltes Magnesiumhydroxid ist ärmer an $B_2O_3$, dafür aber reicher an CaO als ein mit einer unterstöchiometrischen Menge ausgefälltes Magnesiumhydroxid. Darüber hinaus hängt auch die Sedimentationsgeschwindigkeit und die Filtrierbarkeit des im allgemeinen schleimig und schlecht filtrierbar ausfallenden Magnesiumhydroxids vom stöchiometrischen Über- oder Unterschuß des angewendeten Fällungsmittels ab. Mit einer unterstöchiometrischen Fäl-

lungsmittelmenge ausgefälltes Magnesiumhydroxid ist leichter filtrierbar als ein mit der stöchiometrischen oder einer überstöchiometrischen Menge ausgefälltes Magnesiumhydroxid.

Da die Filtrierbarkeit des Magnesiumhydroxidniederschlages ein den zeitlichen Materialdurchsatz und damit die Wirtschaftlichkeit des Prozesses bestimmender Faktor ist, fällt man das im Meerwasser gelöste Magnesium zumeist mit einer unterstöchiometrischen Fällungsmittelmenge in Gegenwart von Fällungskeimen, wie z.B. vorentwässertem Magnesiumhydroxid und Flockungsbeschleunigern, wie z.B. Polyacrylsäureamiden aus.

Für die Gewinnung von hochtemperaturfester Sintermagnesia, wie sie für Stahlkonverterzustellungen verwendet wird, scheidet ein auf diesem Wege gewonnenes Magnesiumoxid wegen der zu hohen $B_2O_3$-Gehalte von 0,1 Gew.-% und darüber aus.

Für Verwendungszwecke dieser Art kommt nur hochreines Magnesiumoxid, das je nach Erfordernis mit Sinterhilfsmitteln versetzt wird, in Betracht. Um aus Meerwasser hergestellte Magnesia in der Stahlindustrie in vermehrtem Umfange anwenden zu können, wurde in der US-PS 3 275 461 bereits ein Verfahren zur Entboratierung von Meerwasser-Magnesia vorgeschlagen, bei welchem die $B_2O_3$-hältige Magnesia mit einer der Umsetzung entsprechend der Reaktionsgleichung (1)

$$Mg_3(BO_3)_2 + Na_2CO_3 \rightarrow 3\ MgO + 2\ NaBO_2 + CO_2 \qquad (1)$$

erforderlichen Menge an Soda vermengt wird, worauf dieses Gemenge zu Briketts verpreßt und die im Ausgangsmaterial enthaltene Borsäure im Zuge des Sinterprozesses bei 1700 $^{\circ}C$ und in Form von Natriummetaborat verflüchtigt wird. Der auf diese Weise erzielbare Rest-$B_2O_3$-Gehalt beträgt etwa 0,03 Gew.-% und ist für höchste Ansprüche noch immer zu hoch.

Der Erfindung liegt nun die Aufgabe zu Grunde, ein einfaches und wirtschaftliches Verfahren zur noch weitergehenden Entboratierung von Meerwasser-Magnesia zu schaffen, welches sich in den Gewinnungsprozeß ohne Schwierigkeiten und ohne wesentliche zusätzliche Energieaufwendungen einbauen läßt.

Zur Lösung dieser Aufgabe ist die Erfindung im wesentlichen dadurch gekennzeichnet, daß das borathältige Magnesiumhydroxid bzw. Magnesiumoxid mit überhitzten Wasserdampf enthaltendem Gas bei Temperaturen von 1200 bis 1500°C, insbesondere 1300 bis 1400°C behandelt wird. Das borathältige Magnesiumhydroxid bzw. Magnesiumoxid wird unter diesen Bedingungen offenbar hydrolytisch entsprechend der Reaktionsgleichung (2)

$$Mg_3(BO_3)_2 + 3\ H_2O \rightarrow 2\ H_3BO_3 + 3\ MgO \qquad (2)$$

umgesetzt, wobei die Orthoborsäure den Reaktor zusammen mit dem überschüssig angewandten Wasserdampf verläßt und ein mehr oder minder entboratisiertes Magnesiumoxid zurückbleibt.

Vorzugsweise wird hiebei so vorgegangen, daß das Magnesiumhydroxid zumindest teilweise entwässert wird und durch eine poröse Schichtung des Magnesiumhydroxids bzw. Magnesiumoxids überhitzten Wasserdampf enthaltendes Gas hindurchgeleitet wird. Für die teilweise Entwässerung kann hiebei in einfacher Weise ein Trommeltrockner herangezogen werden und es kann das Magnesiumhydroxid in einen rieselfähigen Zustand überführt werden, in welchem die Ausbildung einer Wirbelschicht möglich ist. Durch eine derartige Wirbelschicht läßt sich dann der überhitzte Wasserdampf bei Temperaturen von 1300 bis 1400°C hindurchleiten.

In bevorzugter Weise wird für diese Umsetzung nicht reiner Wasserdampf verwendet, sondern ein durch Verbrennungsabgase verdünnter Wasserdampf angewendet. Die kontinuierliche Herstellung von überhitztem Wasserdampf von einer Atmosphäre und einer Temperatur im oben angegebenen Bereich z.B. auf rekuperativem Wege ist wirtschaftlich nicht tragbar und es hat sich gezeigt, daß ein durch Verbrennungsabgase verdünnter Wasserdampf eine ausreichende Entboratisierungswirkung besitzt. Erfindungsgemäß wird daher vorzugsweise so vorgegangen, daß das überhitzten Wasserdampf enthaltende Gas 40-70 Vol.% Wasserdampf, insbesondere 45-55 Vol.% und Verbrennungsabgase, insbesondere $CO_2$ und Stickstoff enthält.

Eine zur Durchführung des erfindungsgemäßen Verfahrens besonders bevorzugte Vorrichtung ist erfindungsgemäß dadurch gekennzeichnet, daß in einem Reaktorgehäuse ein Wirbelbettreaktor mit einer feuerfesten Siebbodenplatte angeordnet ist, wobei unterhalb der Siebbodenplatte Heizeinrichtungen und Zuführungsdüsen für die Zufuhr von wasserdampfhaltigem Gas vorgesehen sind. In einem derartigen Wirbelbettreaktor läßt sich das vorzugsweise vorgetrocknete Magnesiumhydroxid bzw. Magnesiumoxid leicht in einer Wirbelschicht halten, so daß die Behandlung mit dem überhitzten Wasserdampf enthaltenden Gas ohne Schwierigkeiten und mit hoher Effizienz möglich ist. Die Siebbodenplatte einer derartigen Vorrichtung kann beispielsweise aus feuerfestem Magnesiumoxid bestehen, so daß die zu entboratierenden Teilchen nicht unmittelbar mit der Flammentemperatur beaufschlagt werden. Dadurch, daß die Zuführungsdüsen für die Zufuhr von wasserdampfhaltigen Gasen bevorzugt so ausgebildet sind, daß sie die Düsen der von Brennern gebildeten Heizeinrichtungen koaxial umgeben, werden die Brennerdüsen thermisch geschont und gleichzeitig die Durchmischung des wasserdampfhaltigen Gases sichergestellt.

Die Ausbildung ist hiebei vorzugsweise so getroffen, daß zwischen den Brennern und der feuerfesten Siebbodenplatte eine poröse oder mit Durchbrechungen versehene feuerfeste Gasverteilerplatte angeordnet ist. Auf diese Weise wird die Siebbodenplatte vor den direkten Einwirkungen der Brennerabgase geschützt, wobei die Gasverteilerplatte beispielsweise gleichfalls aus Sintermagnesia gefertigt sein kann.

Um eine vollständige und vorzugsweise im Gegenstrom zu den zu entboratisierenden Teilchen erfolgende Strömung des wasserdampfhältigen Gases sicherzustellen, ist vorzugsweise an den Wirbelbettreaktor oberhalb der Siebbodenplatte ein Sauggebläse, insbesondere ein Heißgas-Zyklon angeschlossen. Mit einem derartigen Heißgas-Zyklon lassen sich auch die aus dem Reaktor austretenden Gase weitgehend reinigen und der in diesen Gasen enthaltene Magnesiumoxidstaub abtrennen. Der Heißgas-Zyklon läßt sich dabei in besonders einfacher Weise an der der Aufgabeöffnung für die vorgetrockneten Magnesiumhydroxid- oder Magnesiumoxidteilchen gegenüberliegenden Seite des Wirbelbettreaktors anschließen, so daß die Materialflußrichtung quer zur Strömungsrichtung der Wasserdampf enthaltenden Gase liegt.

Die Erfindung wird nachfolgend an Hand eines in der Zeichnung dargestellten Ausführungsbeispiels einer Vorrichtung zur Durchführung des erfindungsgemäßen Verfahrens sowie an Hand eines Ausführungsbeispieles näher erläutert.

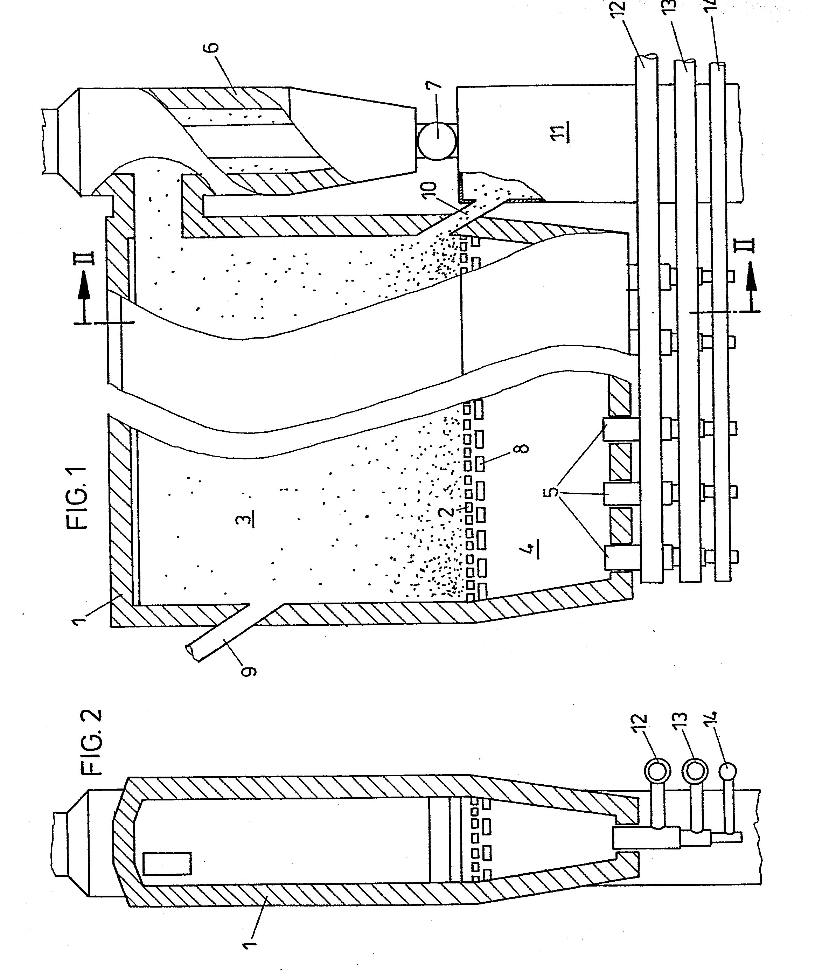

In der Zeichnung zeigt Fig. 1 einen Längsschnitt durch einen Wirbelbettreaktor und Fig. 2 einen Schnitt nach der Linie II-II der Fig. 1.

Der in den Figuren dargestellte Wirbelbettreaktor besteht aus einem mit Sintermagnesiasteinen thermisch isolierten Reaktorgehäuse 1, in dessen unterem Drittel eine ebenfalls aus Sintermagnesia gefertigte Siebbodenplatte 2 angeordnet ist. Die Siebbodenplatte 2 trennt den Reaktor in einen Oberofen 3 und einen Unterofen 4.

Am unteren Ende des Unterofens 4 sind Brennerdüsen 5 angeordnet, welche koaxial zueinander angeordnete Austrittsdüsen für das Heizgas, die Verbrennungsluft und den Wasserdampf aufweisen. Die Brenner werden mit Erdgas, vorerhitzter Luft bzw. sauerstoffangereicherter vorerhitzter Luft und einer Menge an überhitztem Wasserdampf gespeist, welche so eingestellt ist, daß die den Brenner verlassenden Gase eine Temperatur von 1500 bis 1600°C aufweisen. Die Vorerhitzung der Luft bzw. die Überhitzung des Wasserdampfes auf Temperaturen von etwa 400 bis 500°C erfolgt auf rekuperativen Wege mit Hilfe der heißen, den Reaktor verlassenden Verbrennungsabgase. Diese Abgase werden durch einen Zyklon 6 aus dem Oberofen 3 abgezogen und durch den Heißgas-Zyklon wird gleichzeitig eine Reinigung des abgezogenen Verbrennungsabgases erzielt. Über die am unteren Ende des Heißgas-Zyklons 6 angeordnete Zellradschleuse 7 wird der in den Abgasen enthaltene Magnesiumoxidstaub getrennt und ausgebracht.

Um die Siebbodenplatte 2 vor dem direkten Angriff der Brennerabgase zu schützen, befindet sich unterhalb derselben eine gleichfalls aus Sintermagnesia gefertige, grobperforierte Gasverteilerplatte 8.

Oberhalb der Siebbodenplatte 2, d.h. im Oberofen 3, befindet sich der Reaktionsraum, in dem die Entboratierung stattfindet. Das zu entboratierende Magnesiumoxid wird auf der dem Heißgas-Zyklon 6 gegenüberliegenden Seite des Reaktorgehäuses 1 über eine Aufgabeöffnung 9 eingebracht und an der der Aufgabeöffnung gegenüberliegenden Seite unterhalb des Heißgas-Zyklons 6 über eine Öffnung 10 des Reaktorgehäuses in einen Bunker für entboratiertes Magnesiumoxid 11 ausgebracht.

Die koaxialen Düsen werden über drei die Düsen verbindende Leitungen 12,13 und 14 gespeist, wobei die Leitung 12 für Wasserdampf, die Leitung 13 für Luft und die Leitung 14 für Erdgas vorgesehen ist. Die Düsenaustrittsöffnungen für die

Luft bzw. den Wasserdampf liegen radial außerhalb der zentralen Brennerdüse für das Erdgas. Im Betrieb können alle diese Leitungen unter einem Druck von etwa 4 bar betrieben werden, wobei Wasserdampf und Luft mit Temperaturen von beispielsweise 400°C und Erdgas mit einer Temperatur von etwa 20°C zugeführt werden kann.

Durch die über die Düsen 5 eingebrachten Gase wird im Oberofen 3 ein Fluidatbett bzw. Wirbelbett aufrechterhalten, wobei das zu entboratierende Material sich auf- und abbewegend von der Aufgabeöffnung 9 zur Abstichöffnung 10 bewegt. Aus geometrischen Gründen ist es günstig, die Aufgabeöffnung 9 und die Abstichöffnung 10 an den Schmalseiten eines im wesentlichen rechteckigen Querschnitt aufweisenden Reaktor vorzusehen, so daß eine hinreichend lange Strecke für die Reaktion mit dem Wasserdampf enthaltenden Gas sichergestellt ist. Die Vermischung von frischem zu entboratierenden Material mit fertig entboratierten Material kann auf diese Weise durch die gerichtete Strömung weitgehend verhindert werden, wobei das als Entboratierungsmittel eingesetzte wasserdampfhaltige Gas sich quer zur Materialflußrichtung im Querstrom bewegt.

Ein derartiges Querstromverfahren hat den Vorteil, daß das zu entboratierende Magnesiumhydroxid bzw. Magnesiumoxid stets mit frischem boratfreiem Wasserdampf in Berührung kommt, so daß die Entboratierung auf dem Wege durch den Reaktionsraum besonders wirkungsvoll ist.

Die Länge der Reaktionskammer, d.h. der Abstand der Schmalseiten voneinander ist so bemessen, daß die mittlere Verweildauer eines Magnesiumhydroxid- bzw. Magnesiumoxidpartikels bei der Reaktionstemperatur etwa 15 bis 20 min beträgt. Als bevorzugte Reaktionstemperatur wird eine Temperatur von 1380 ± 20°C gewählt.

Die schwereren und gröberen mit dem Gasstrom schwer mitreißbaren Teilchen werden über den Materialaustrag 10 aus dem Fluidatbett ausgetragen, wohingegen die feineren mit dem Gasstrom leichter mitreißbaren Teilchen in dem dem Reaktor nachgeschalteten Heißgas-Zyklon abgeschieden werden. Die den Zyklon verlassenden Abgase werden über einen Wärmeaustauscher geleitet und auf diese Weise abgekühlt. Im Gegenstrom zu den Abgasen wird Luft und Wasserdampf in jeweils separaten, zunderfesten Rohrleitungen durch den Wärmetauscher geführt. Die Endtemperatur dieser Gase beim Austritt aus dem Wärmetauscher beträgt üblicherweise zwischen 400 und 500°C, insbesondere 450 bis 500°C.

Die vorerhitzte Luft dient der Verbrennung des Erdgases und zur Trocknung von abfiltriertem Magnesiumoxid bzw. Hydroxid in nicht dargestellten dem Reaktor vorgeschalteten Trommeltrocknern. Der überhitzte Wasserdampf dient der Abkühlung der Erdgasverbrennungsabgase und zur Freisetzung der Borsäure im Reaktor. Auf diese Weise wird die bei der Verbrennung des Erdgases freigesetzte Wärme zu einem hohen Teil im Prozeß wiederum nutzbar gemacht.

In einem dem Heißgas-Zyklon 6 nachgeschalteten Rekuperator und dem diesem nachgeschalteten und nicht dargestellten Staubsack bzw. Elektrofilter reichert sich noch feinster zum Teil hoch mit $B_2O_3$ angereicherter Magnesiumoxidstaub an. Dieser mit $B_2O_3$ angereicherte Magnesiumoxidstaub darf nicht mit dem entboratiertem Magnesiumoxid vermengt werden. Er kann jedoch je nach Menge und $B_2O_3$-Gehalt entweder durch alkalische Laugung unter Bildung von $B_2O_3$ armen, als Rückgut verwendbarem Magnesiumoxid und Natriumborat aufgearbeitet werden, oder als Magnesiumboratdünger vermarktet werden.

Wertlose zu verhaldende Nebenprodukte oder gefährliche die Umwelt belastende Giftstoffe entstehen im Verlauf des erfindungsgemäßen Verfahren nicht.

Ausführungsbeispiel:

Als Ausgangsmaterial wurde $B_2O_3$ hältiges Magnesiumoxid mit einem $B_2O_3$-Gehalt von 1480 ppm (0,148 %) eingesetzt. Die Temperatur im Reaktor wurde auf 1400°C eingestellt. Als Entboratierungsmittel wurde wasserdampfhältiges Erdgasverbrennungsgas mit einem Wasserdampfgehalt von 52,27 Vol.%, einem $CO_2$-Gehalt von 9,59 Vol.% und einem Stickstoffgehalt von 42,14 Vol.% eingesetzt. Die Dauer der Entboratierung betrug 25 min, und es wurde auf diese Weise ein End-$B_2O_3$--Gehalt von 90 ppm, d.h. 0,009 Gew.% erzielt.

1984 02 17/Gm

Patentansprüche

1. Verfahren zum Abtrennen von Boraten von aus Meerwasser erhaltenem Magnesiumhydroxid, aus welchem insbesondere durch thermische Behandlung Magnesiumoxid herstellbar ist, dadurch gekennzeichnet, daß das borathältige Magnesiumhydroxid mit überhitzten Wasserdampf enthaltendem Gas bei Temperaturen von 1200 bis 1500°C, insbesondere 1300 bis 1400°C, behandelt wird.

2. Verfahren nach Anspruch 1, dadurch gekennzeichnet, daß das Magnesiumhydroxid zumindest teilweise entwässert wird und durch eine poröse Schichtung des Magnesiumhydroxids überhitzten Wasserdampf enthaltendes Gas hindurchgeleitet wird.

3. Verfahren nach Anspruch 1 oder 2, dadurch gekennzeichnet, daß ein überhitzten Wasserdampf enthaltendes Gas eingesetzt wird, das 40 bis 70 Vol.%, insbesondere 45 bis 55 Vol.%, Wasserdampf und Verbrennungsabgase, insbesondere $CO_2$ und Stickstoff, enthält.

4. Vorrichtung zur Durchführung des Verfahrens nach einem der Ansprüche 1,2 oder 3, dadurch gekennzeichnet, daß in einem Reaktorgehäuse (1) ein Wirbelbettreaktor mit einer feuerfesten Siebbodenplatte (2) angeordnet ist, wobei unterhalb der Siebbodenplatte (2) Heizeinrichtungen und Zuführungsdüsen für die Zufuhr von wasserdampfhaltigem Gas vorgesehen sind.

5. Vorrichtung nach Anspruch 4, dadurch gekennzeichnet, daß die Heizeinrichtungen von Brennern gebildet sind, deren Düsen (5) koaxial von den Zuführungsdüsen von Wasserdampf und Verbrennungsabgasen umgeben sind.

6. Vorrichtung nach Anspruch 4 oder 5, dadurch gekennzeichnet, daß zwischen den Brennern und der feuerfesten Siebbodenplatte (2) eine poröse oder mit Durchbrechungen versehene, feuerfeste Gasverteilerplatte (8) angeordnet ist.

7. Vorrichtung nach einem der Ansprüche 4, 5 oder 6, dadurch gekennzeichnet, daß an den Wirbelbettreaktor oberhalb der Siebbodenplatte (2) ein Sauggebläse, insbesondere ein Heißgas-Zyklon (6), angeschlossen ist.

1984 02 17/Gm

0123669

1/1

FIG.1

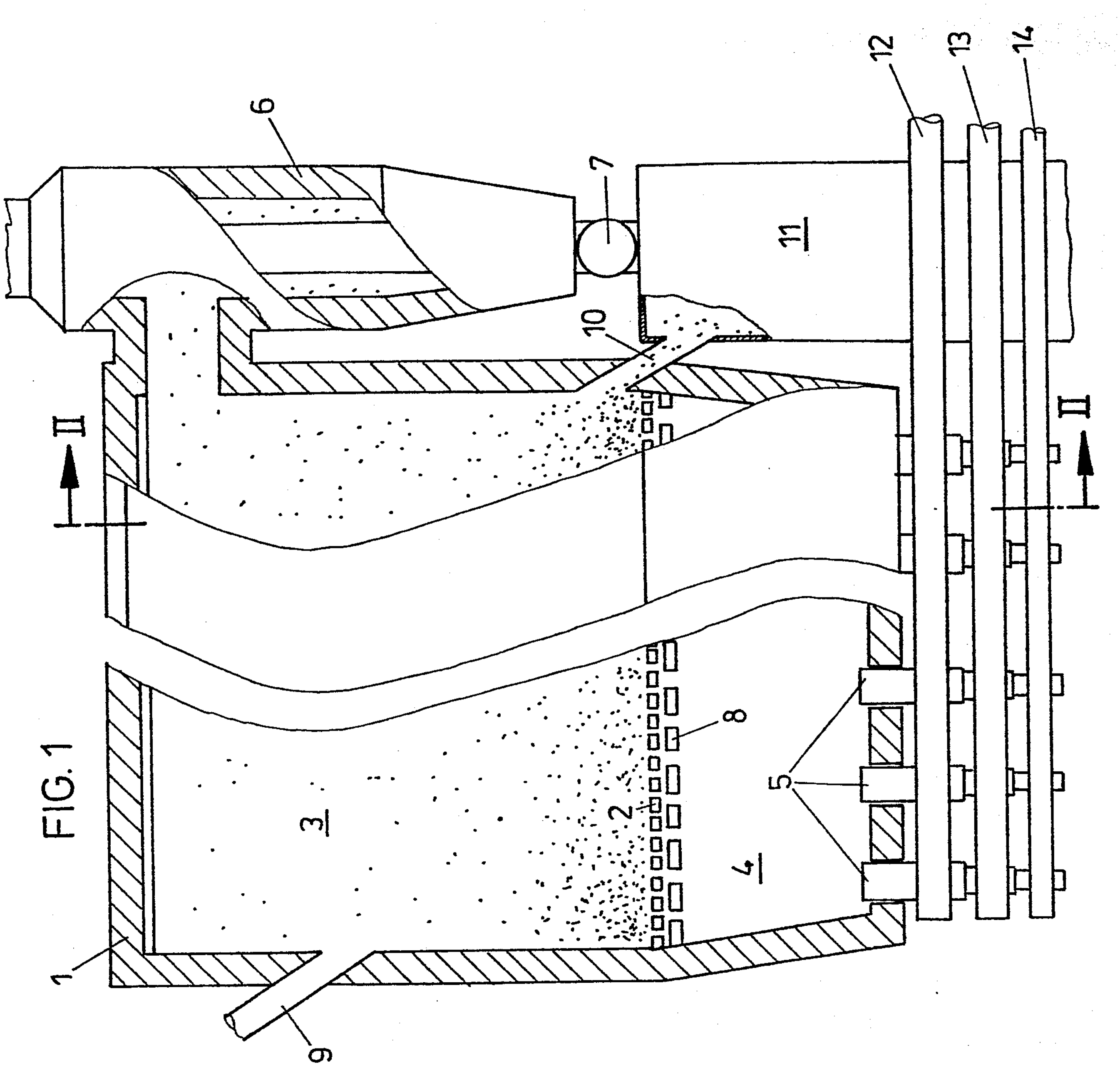


FIG.2